(19) Europäisches Patentamt
European Patent Office
Office européen des brevets

(11) **EP 1 075 790 B1**

(12) **EUROPEAN PATENT SPECIFICATION**

(45) Date of publication and mention
of the grant of the patent:
**18.02.2004 Bulletin 2004/08**

(51) Int Cl.⁷: **A01N 3/02**, A01N 59/06, A01N 59/00

(21) Application number: **98953017.5**

(22) Date of filing: **11.11.1998**

(86) International application number:
**PCT/JP1998/005081**

(87) International publication number:
**WO 1999/055153 (04.11.1999 Gazette 1999/44)**

(54) **CUT-FLOWER FRESHNESS RETENTIVE**

FRISCHHALTEMITTEL FÜR SCHNITTBLUMEN

AGENT DE CONSERVATION DE FRAICHEUR POUR FLEURS COUPEES

(84) Designated Contracting States:
**CH FR LI NL**

(30) Priority: **27.04.1998 JP 13436698**

(43) Date of publication of application:
**14.02.2001 Bulletin 2001/07**

(73) Proprietor: **OTSUKA KAGAKU KABUSHIKI KAISHA**
**Osaka-shi, Osaka-fu 540-0021 (JP)**

(72) Inventors:
• **NAKAYAMA, Michinori,**
**Otsuka Kagaku Kabushiki K.**
**cho, Naruto-shi, Tokushima-ken 772-0021 (JP)**
• **IKEDA, Masafumi, Otsuka Kagaku Kabushiki K.**
**cho, Naruto-shi, Tokushima-ken 772-0021 (JP)**

• **MORIYAMA, Tomoko,**
**Otsuka Kagaku Kabushiki K.**
**cho, Naruto-shi, Tokushima-ken 772-0021 (JP)**
• **SAKA, Kenichi, Otsuka Kagaku Kabushiki K.**
**cho, Naruto-shi, Tokushima-ken 772-0021 (JP)**

(74) Representative: **Barz, Peter**
**Patentanwalt**
**Kaiserplatz 2**
**80803 München (DE)**

(56) References cited:
WO-A-95/34199          FR-A- 2 266 458
JP-A- 7 089 801          JP-A- 8 333 202
JP-A- 49 018 653         JP-B1- 46 042 563
US-A- 5 284 818

## Description

TECHNICAL FIELD

The present invention relates to a preservative for keeping the freshness of cut flowers and more particularly to a preservative which is remarkably effective in keeping the freshness of cut roses.

BACKGROUND ART

Japan is one of the worlds's biggest consumers of cut flowers. Therefore, it is very important for Japan to preserve the freshness of cut flowers in the course of their production, distribution and consumption. The mechanism for losing the freshness of cut flowers is known to lie in reduction in preserving ability of cut flowers due to microorganisms and deterioration of water, decrease in the quantity of components produced in the plant body because of exhaustion of energy source, the activity of ethylene as a plant hormone, etc. Against this background, a wide variety of preservatives for keeping the freshness of cut flowers have been proposed.

For example, JP-A-49-18653 proposed a preservative comprising glucose, aluminum sulfate and the like. JP-A-2-108601 proposed a preservative for keeping the freshness of cut roses comprising abscisic acid, aluminum sulfate and saccharide as effective components. The latter publication describes that the abscisic acid is used to prolong the rose life by suppression of flowering and that the saccharide acts as a nutrient for flowers to promote flowering and to prevent bluing. JP-A-64-61401 proposed a preservative for extending the life of cut roses comprising metabolic saccharide, phosphonic acid and aluminum sulfate. JP-A-6-199602 proposed a preservative for extending the life of cut flowers comprising metabolic saccharide, citric acid, aluminum sulfate, 8-hydroxyquinoline sulfate and ammonium acetate. JP-A-6-183902 proposed a preservative for cut roses comprising 2-carboxyethylphosphonic acid, aluminum sulfate, calcium chloride, saccharose and the like.

However, these proposed techniques do not refer at all to the enhancement of cut flower freshness-keeping effect by the addition of a potassium salt, and the proposed preservatives remained still unsatisfactory in the cut flower freshness-keeping effect. Further it was unknown that the cut flower freshness-keeping effect is reduced by the addition of aluminum in more than a specific amount when an aluminum salt is used in combination with fructose or trehalose and a potassium salt.

An object of the present invention is to provide a preservative for keeping the freshness of cut flowers, particularly one which is highly effective in keeping the freshness of cut roses.

DISCLOSURE OF THE INVENTION

The present invention provides a preservative for keeping the freshness of cut flowers, characterized by containing, as effective components, 0.8 to 2 wt.% of at least one saccharide selected from fructose and trehalose, at least one species of potassium salts in a concentration of 100 to 1000 ppm calculated as $K_2O$, and at least one compound selected from aluminum salts or hydrates thereof in a concentration of 1 to 30 ppm calculated as Al.

Preferred embodiments of the present invention are as follows.

(1) The preservative for keeping the freshness of cut flowers wherein the salt of potassium is potassium chloride.
(2) The preservative for keeping the freshness of cut flowers wherein the saccharide is fructose.
(3) The use of the preservative for keeping the freshness of cut roses.

Considering that if placed under the best conditions, a harvested rose may prolong its life as long as a non-harvested flowered rose, the present inventor converted the existing concept of keeping the freshness of cut flowers and conducted extensive research in an attempt to make a new approach from the viewpoint of growing the flowers with a nutrient fertilizer. As a result, the inventor found that importance is attached to a balance between the effect of keeping the freshness of cut flowers by the effective components and the affliction of damage by the effective components, particularly to proportions of saccharide, potassium and aluminum among the effective components. Based on this novel finding, the present invention was accomplished.

Usable as the saccharide in the cut flower freshness-keeping preservative of the invention are fructose and trehalose. Especially when fructose is used, it is possible to attain the longest term of keeping the freshness of cut flowers.

These saccharides are used in a concentration of 0.8 to 2 wt.%, preferably 1.0 to 1.4 wt.%. The concentration of saccharides indicated in the specification was measured by use of saccharimeter. The cut flower freshness-keeping term tends to increase with an increase in the concentration of saccharide within the range of 2 wt.% or less. On the other hand, when the concentration of saccharide exceeds 2.0 wt.%, it is likely that damage may be inflicted on leaves in the case of cut roses or like cut flowers and the value of cut flowers as a decorative plant may be reduced. Less than 0.8 wt.% of saccharide gives an insufficient effect and is undesirable.

Specific examples of the potassium salt in the cut flower freshness-keeping preservative of the invention are potassium chloride, potassium carbonate, potassium nitrate, potassium sulfate, potassium phosphate, potassium bromide, potassium bromate and potassium iodide. The presence of potassium salt is effective in preserving the flower color and the elasticity of flower petal and in preserving and increasing the fragrance. Among potassium salts, potassium chloride and potassium carbonate are preferred in terms of the cut flower freshness-keeping effect and potassium chloride is more preferred. The potassium salt is used in a concentration of 100 to 1000 ppm, preferably 250 to 800 ppm, calculated as $K_2O$. If the concentration of potassium salt exceeds 1000 ppm calculated as $K_2O$, it is likely that damage may be done to leaves, thereby lowering the value of flower as a decorative plant. Less than 200 ppm impairs the elasticity of flower petal and shortens the cut flower freshness-keeping term.

The cut flower freshness-keeping preservative of the present invention contains at least one compound selected from aluminum salts or hydrates thereof in a concentration of 1 to 30 ppm, preferably 2 to 20 ppm, more preferably 2 to 10 ppm, calculated as Al. Useful aluminum compounds include, for example, aluminum sulfate and aluminum chloride. Among them, aluminum sulfate is preferred. If the amount of aluminum compound is less than 1 ppm calculated as Al, the cut flower freshness-keeping term is shortened, and hence said amount range is not desirable.

On the other hand, when an aluminum compound is used together with saccharide and a potassium salt, the concentration of more than 10 ppm calculated as Al scarcely improves the cut flower freshness-keeping effect. Furthermore, more than 20 ppm lessens the cut flower freshness-keeping effect, and more than 30 ppm so diminishes the effect as to significantly lower the contemplated effect of the preservative. Hence the use of the compounds in these concentrations is undesirable. Such phenomenon markedly occurs in regard to roses, although the reason is not clear. Presumably it is due to damage from aluminum compound and damage from mutual activity of these compounds with saccharide and a potassium salt.

The cut flower freshness-keeping preservative of the present invention may contain at least one species of bactericides. Examples of useful bactericides are a sodium salt of pyridine-2-thiol-1-oxide and like quaternary ammonium salts, 5-chloro-2-methyl-4-isothiazoline-3-one, 2-methyl-4-isothiazoline-3-one and like isothiazolines, 2-bromo-2-nitropropane-1,3-diol, 8-hydroxyquinoline, thiabendazole, sodium N-chloro-p-toluenesulfonamide trihydrate, silver nitrate, retardantly effective chlorine compound and sodium benzoate. The concentration of the bactericide in the preservative is about 0.1 to about 600 ppm, preferably about 1.0 to about 10 ppm. Among these bactericides, a sodium salt of pyridine-2-thiol-1-oxide and isothiazoline are excellent in the cut flower freshness-keeping effect. When at least one species of a sodium salt of pyridine-2-thiol-1-oxide and isothiazolines is used as a bactericide, it is favorable to use them in a concentration of about 0.1 to about 50 ppm, preferably about 0.1 to about 10 ppm.

These bactericides can be used as dissolved in water, alcohol or like organic solvents.

The cut flower freshness-keeping preservative of the present invention may contain additives within the range which does not impair the effect of the invention. Examples of useful additives are pH-adjustors such as citric acid and carboxylic acid, plant growth regulators such as 6-benzylaminopurine (BA), divalerin, abscisic acid and naphthylphthalic acid, ethylene-synthesizing inhibitors such as silver thiosulfate (STS) and cis-propenylphosphonic acid, vitamins and like physiologically active substances, organic solvents such as methanol, ethanol, propanol and like alcohols and surfactants.

The cut flower freshness-keeping preservative of the present invention can be prepared by dissolving predetermined amounts of effective components in organic solvents, preferably water. Optionally for the convenience of distribution and preservation, the cut flower freshness-keeping preservative of the present invention may be produced as a preparation and packaged, the preparation comprising 1.2 to 50 times the specific amounts of effective components. Before use, the preparation is diluted to a specific concentration with specific times the amount of water. When the components of the preservative are free of oils and liquids, the preservative can be used in the form of powders, granulars, tablets or the like as diluted with a specific amount of water.

The cut flower freshness-keeping preservative of the present invention can fully exhibit its cut flower freshness-keeping effect at any time after harvesting the flowers but can achieve the highest effectiveness when used at a stage wherein the flowers are viewed. The preservative of the invention can be effectively used also for cut flowers treated with pretreating agents such as silver thiosulfate (STS), highly concentrated saccharides and bactericides.

The cut flower freshness-keeping preservative of the present invention is effective for a wide variety of flowers. Examples of these flowers are roses, baby's breaths, carnations, chrysanthemums, turkish bellflowers, gerberas and hydrangeas. Among them, a particularly high effect is exhibited on roses.

It is needless to mention that the cut flower freshness-keeping preservative of the invention can prolong the life of cut flowers which would not be attained without use of the preservative of the invention. In addition, the preservative of the invention can preserve the beauty of flower color and leaf color, and allows the viewer of flowers to enjoy a pleasant fragrance of the flowers.

BRIEF DESCRIPTION OF THE DRAWINGS

FIG.1 is a graph showing how the concentration of aluminum sulfate affects the change in weight of live rose.

FIG.2 is a graph showing how the concentrations of aluminum sulfate and aluminum chloride affect the change in weight of live rose.

FIG.3 is a graph showing how the type of saccharides affects the change in weight of live rose.

FIG.4 is a graph showing how the concentration of potassium compound affects the change in weight of live rose.

FIG.5 is a graph showing how the concentration of potassium compound affects the change in weight of live rose.

FIG.6 is a graph showing how the type of potassium salts affects the change in weight of live rose.

FIG.7 is a graph showing how the type of bactericides affects the change in weight of live rose.

Examples and Comparative Examples are given below to describe the present invention in more detail. A simple symbol % means % by weight.

NAPT: sodium salt of pyridine-2-thiol-1-oxide (product of Dainippon Ink and Chemicals, Inc.);

NAPT-40: 40% solution of sodium salt of pyridine-2-thiol-1-oxide;

Applec® DN-15: aqueous solution containing 1.0% of 5-chloro-2-methyl-4-isothiazoline-3-one, 0.3% of 2-methyl-4-isothiazoline-3-one, 4.5% of magnesium chloride and 7.5% of magnesium nitrate (product of Maruwa Biochemical Co., Ltd.);

Halamid®: sodium N-chloro-p-toluenesulfonamide trihydrate (Akzo Nobel Chemicals).

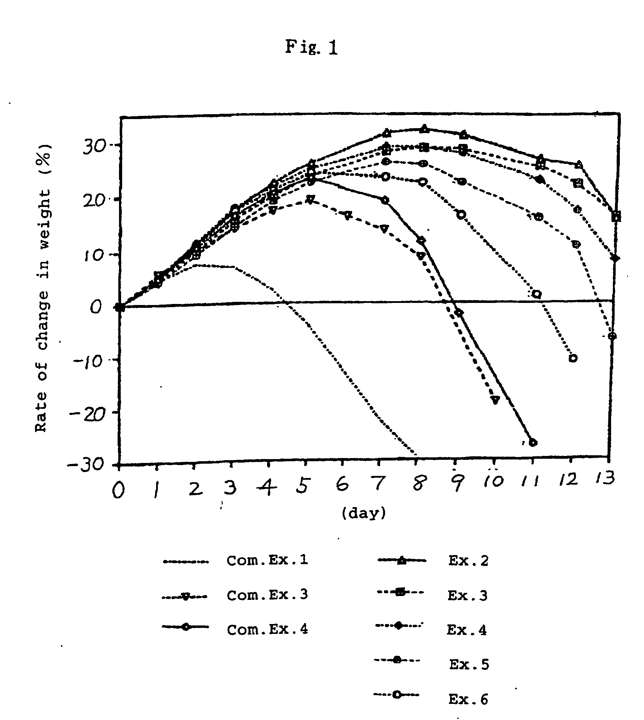

After harvesting rose flowers (rote Rose), 33 cm-long stems were drained without pretreatment. Provided for tests were rose flowers which flowered to an extent of buds slightly bulging out. In each test group, the test conditions were that 600 ml of a test preservative was used and ten stems of rose were tested at room temperature (22°C) at a water temperature of 22°C. The number of passing days and a rate of change in weight of live flowers (average value) were measured and the results are shown in FIGS.1 to 7.

Example 1

A preservative for keeping cut flower freshness was prepared which comprised 1.5% of fructose, potassium chloride (315 ppm calculated as $K_2O$) and aluminum sulfate (5 ppm calculated as Al) dissolved in water.

Example 2

A preservative for keeping cut flower freshness was prepared which comprised 1.5% of fructose, potassium chloride (315 ppm calculated as $K_2O$), NAPT-40 (10 ppm calculated as NAPT) and aluminum sulfate (5 ppm calculated as Al) dissolved in water.

Example 3

A preservative for keeping cut flower freshness was prepared which comprised 1.5% of fructose, potassium chloride (315 ppm calculated as $K_2O$), NAPT-40 (10 ppm calculated as NAPT) and aluminum sulfate (10 ppm calculated as Al) dissolved in water.

Example 4

A preservative for keeping cut flower freshness was prepared which comprised 1.5% of fructose, potassium chloride (315 ppm calculated as $K_2O$), NAPT-40 (10 ppm calculated as NAPT) and aluminum sulfate (15 ppm calculated as Al) dissolved in water.

Example 5

A preservative for keeping cut flower freshness was prepared which comprised 1.5% of fructose, potassium chloride (315 ppm calculated as $K_2O$), NAPT-40 (10 ppm calculated as NAPT) and aluminum sulfate (20 ppm calculated as Al) dissolved in water.

Example 6

A preservative for keeping cut flower freshness was prepared which comprised 1.5% of fructose, potassium chloride (315 ppm calculated as $K_2O$), NAPT-40 (10 ppm calculated as NAPT) and aluminum sulfate (1 ppm calculated as Al) dissolved in water.

Example 7

A preservative for keeping cut flower freshness was prepared which comprised 1.5% of fructose, potassium chloride (315 ppm calculated as $K_2O$), NAPT-40 (10 ppm calculated as NAPT) and zinc chloride (5 ppm calculated as Zn) dissolved in water.

Example 8

A preservative for keeping cut flower freshness was prepared which comprised 1.5% of fructose, potassium chloride (315 ppm calculated as $K_2O$), NAPT-40 (10 ppm calculated as NAPT) and hexahydrate of aluminum chloride (5 ppm calculated as Al) dissolved in water.

Example 9

A preservative for keeping cut flower freshness was prepared which comprised 1.5% of fructose, potassium chloride (315 ppm calculated as $K_2O$), NAPT-40 (10 ppm calculated as NAPT) and hexahydrate of aluminum chloride (20 ppm calculated as Al) dissolved in water.

Example 10

A preservative for keeping cut flower freshness was prepared by adding tartaric acid to the preservative of Example 2 to adjust the pH to 4.

Example 11 (Reference example)

A preservative for keeping cut flower freshness was prepared which comprised 1.5% of sucrose, potassium chloride (315 ppm calculated as $K_2O$), NAPT-40 (10 ppm calculated as NAPT) and aluminum sulfate (5 ppm calculated as Al) dissolved in water.

Example 12 (Reference example)

A preservative for keeping cut flower freshness was prepared which comprised 1.5% of glucose, potassium chloride (315 ppm calculated as $K_2O$), NAPT-40 (10 ppm calculated as NAPT) and aluminum sulfate (5 ppm calculated as Al) dissolved in water.

Example 13 (Reference example)

A preservative for keeping cut flower freshness was prepared which comprised 1.5% of maltose, potassium chloride (315 ppm calculated as $K_2O$), NAPT-40 (10 ppm calculated as NAPT) and aluminum sulfate (5 ppm calculated as Al) dissolved in water.

Example 14 (Reference example)

A preservative for keeping cut flower freshness was prepared which comprised 1.5% of mannitol, potassium chloride (315 ppm calculated as $K_2O$), NAPT-40 (10 ppm calculated as NAPT) and aluminum sulfate (5 ppm calculated as Al) dissolved in water.

Example 15 (Reference example)

A preservative for keeping cut flower freshness was prepared which comprised 1.5% of sorbitol, potassium chloride (315 ppm calculated as $K_2O$), NAPT-40 (10 ppm calculated as NAPT) and aluminum sulfate (5 ppm calculated as Al) dissolved in water.

Example 16

A preservative for keeping cut flower freshness was prepared which comprised 1.5% of trehalose, potassium chloride (315 ppm calculated as $K_2O$), NAPT-40 (10 ppm calculated as NAPT) and aluminum sulfate (5 ppm calculated as Al) dissolved in water.

Example 17

A preservative for keeping cut flower freshness was prepared which comprised 1.5% of fructose, potassium chloride (105 ppm calculated as $K_2O$), NAPT-40 (10 ppm calculated as NAPT) and aluminum sulfate (10 ppm calculated as Al) dissolved in water.

Example 18

A preservative for keeping cut flower freshness was prepared which comprised 1.5% of fructose, potassium chloride (158 ppm calculated as $K_2O$), NAPT-40 (10 ppm calculated as NAPT) and aluminum sulfate (10 ppm calculated as Al) dissolved in water.

Example 19

A preservative for keeping cut flower freshness was prepared which comprised 1.5% of fructose, potassium chloride (315 ppm calculated as $K_2O$), NAPT-40 (10 ppm calculated as NAPT) and aluminum sulfate (10 ppm calculated as Al) dissolved in water.

Example 20

A preservative for keeping cut flower freshness was prepared which comprised 1.5% of fructose, potassium chloride (630 ppm calculated as $K_2O$), NAPT-40 (10 ppm calculated as NAPT) and aluminum sulfate (10 ppm calculated as Al) dissolved in water.

Example 21

A preservative for keeping cut flower freshness was prepared which comprised 1.5% of fructose, potassium chloride (525 ppm calculated as $K_2O$), NAPT-40 (10 ppm calculated as NAPT) and aluminum sulfate (10 ppm calculated as Al) dissolved in water.

Example 22

A preservative for keeping cut flower freshness was prepared which comprised 1.5% of fructose, potassium chloride (741 ppm calculated as $K_2O$), NAPT-40 (10 ppm calculated as NAPT) and aluminum sulfate (10 ppm calculated as Al) dissolved in water.

Example 23

A preservative for keeping cut flower freshness was prepared which comprised 1.5% of fructose, potassium chloride (1050 ppm calculated as $K_2O$), NAPT-40 (10 ppm calculated as NAPT) and aluminum sulfate (10 ppm calculated as Al) dissolved in water.

Example 24

A preservative for keeping cut flower freshness was prepared which comprised 1.5% of fructose, potassium carbonate (315 ppm calculated as $K_2O$), NAPT-40 (10 ppm calculated as NAPT) and aluminum sulfate (5 ppm calculated as Al) dissolved in water.

Example 25

A preservative for keeping cut flower freshness was prepared which comprised 1.5% of fructose, potassium nitrate (315 ppm calculated as $K_2O$), NAPT-40 (10 ppm calculated as NAPT) and aluminum sulfate (5 ppm calculated as Al) dissolved in water.

Example 26

A preservative for keeping cut flower freshness was prepared which comprised 1.5% of fructose, potassium sulfate (315 ppm calculated as $K_2O$), NAPT-40 (10 ppm calculated as NAPT) and aluminum sulfate (5 ppm calculated as Al) dissolved in water.

Example 27

A preservative for keeping cut flower freshness was prepared which comprised 1.5% of fructose, potassium chloride (315 ppm calculated as $K_2O$), Applec DN-15 (diluted 20000-fold, 0.65 ppm calculated as isothiazoline) and aluminum sulfate (5 ppm calculated as Al) dissolved in water.

Example 28

A preservative for keeping cut flower freshness was prepared which comprised 1.5% of fructose, potassium chloride (315 ppm calculated as $K_2O$), Applec DN-15 (diluted 40000-fold, 0.33 ppm calculated as isothiazoline) and aluminum sulfate (5 ppm calculated as Al) dissolved in water.

Example 29

A preservative for keeping cut flower freshness was prepared which comprised 1.5% of fructose, potassium chloride (315 ppm calculated as $K_2O$), Applec DN-15 (diluted 80000-fold, 0.16 ppm calculated as isothiazoline) and aluminum sulfate (5 ppm calculated as Al) dissolved in water.

Example 30

A preservative for keeping cut flower freshness was prepared which comprised 1.5% of fructose, potassium chloride (315 ppm calculated as $K_2O$), Halamid (10 ppm) and aluminum sulfate (5 ppm calculated as Al) dissolved in water.

Example 31

A preservative for keeping cut flower freshness was prepared which comprised 1.5% of fructose, potassium chloride (315 ppm calculated as $K_2O$), ethanol (200 ppm) and aluminum sulfate (5 ppm calculated as Al) dissolved in water.

Comparative Example 1

Deionized water alone

Comparative Example 2

Commercially available chrysal (product of Pokon & Chrysal B.V.) was used.

Comparative Example 3

A preservative for keeping cut flower freshness was prepared which comprised 1.5% of fructose, potassium chloride (315 ppm calculated as $K_2O$), NAPT-40 (10 ppm calculated as NAPT) and aluminum sulfate (64 ppm calculated as Al) dissolved in water.

Comparative Example 4

A preservative for keeping cut flower freshness was prepared which comprised 1.5% of fructose, potassium chloride (315 ppm calculated as $K_2O$) and NAPT-40 (10 ppm calculated as NAPT) dissolved in water.

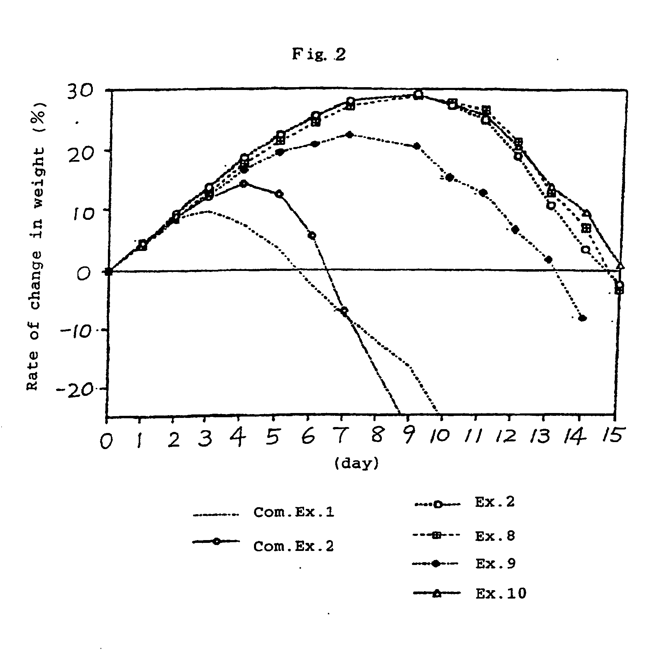

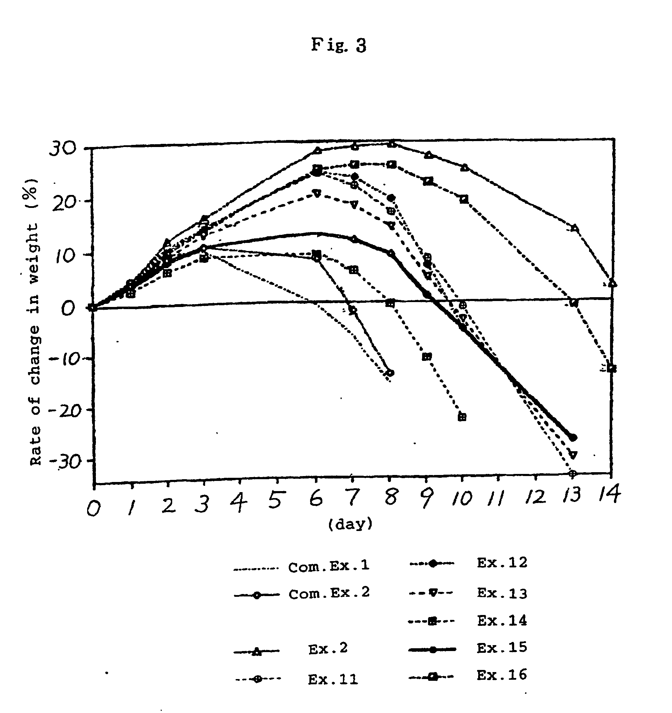

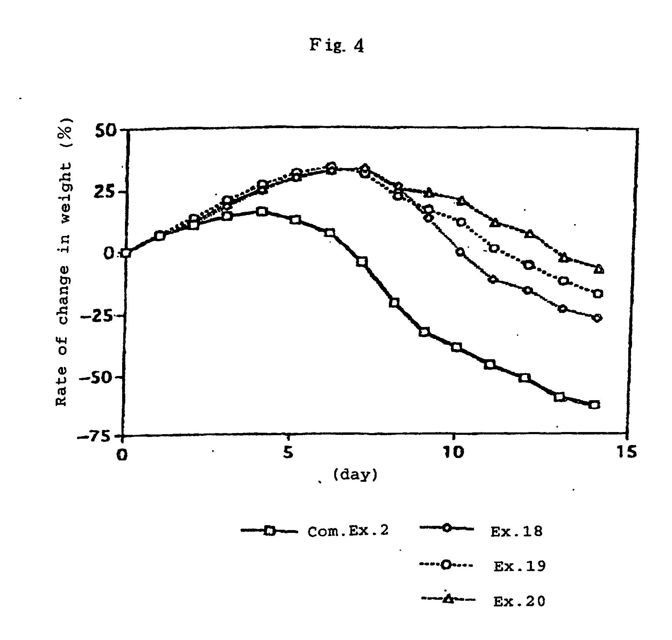

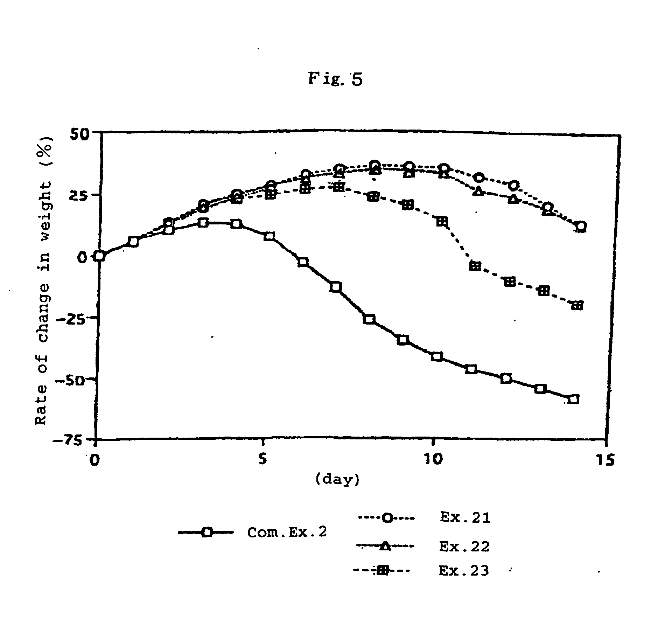

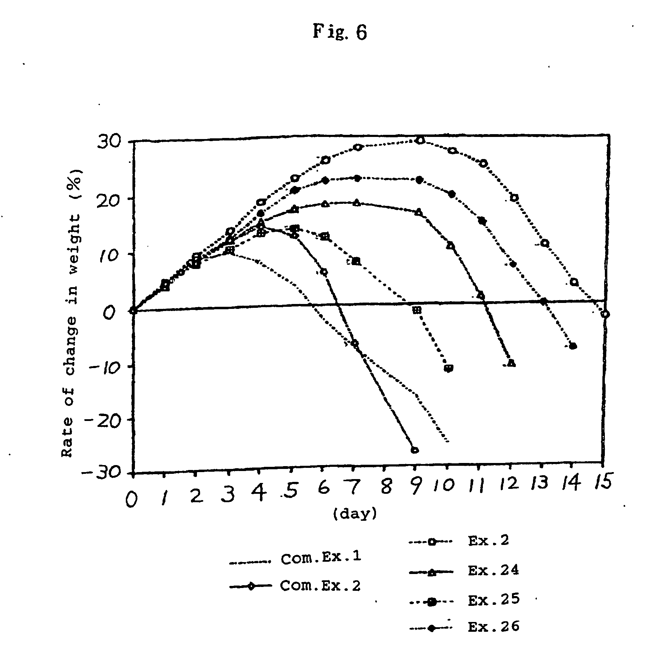

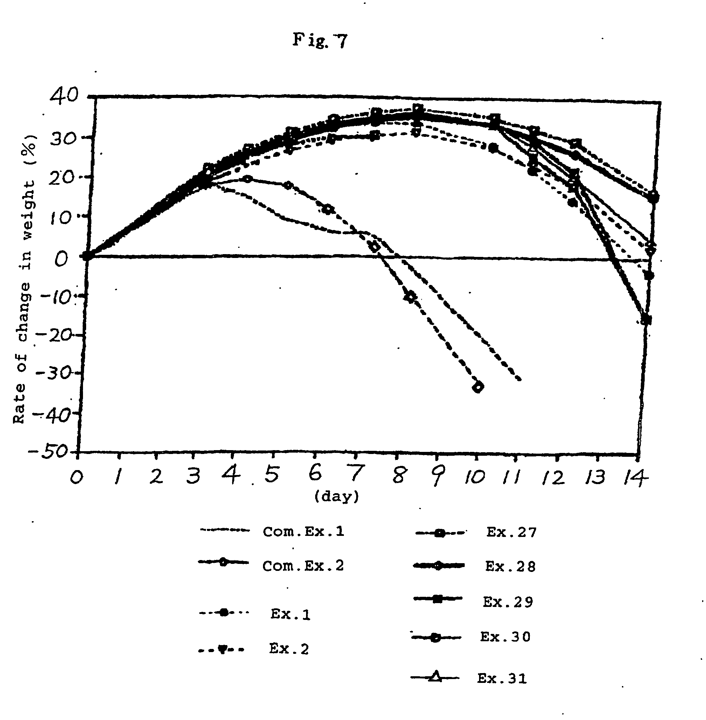

FIG.1 shows how the change in weight of live rose was affected by the concentrations of aluminum sulfate in Examples 2 to 6 and Comparative Examples 1, 3 and 4. FIG.2 shows how the change in weight of live rose was affected by the concentrations of aluminum sulfate and aluminum chloride in Examples 2 and 8 to 10 and Comparative Examples 1 and 2. FIG.3 shows how the change in weight of live rose was affected by the kinds of saccharides in Examples 2 and 11 to 16 and Comparative Examples 1 and 2. FIGS.4 and 5 show how the change in weight of live rose was affected by the concentration of potassium compound in Examples 18 to 23 and Comparative Example 2. FIG.6 shows how the change in weight of live rose was affected by the kinds of potassium salts in Examples 2, 24 to 26 and Comparative Examples 1 and 2. FIG.7 shows how the change in weight of live rose was affected by the kinds of bactericides in Examples 1 and 2 and 27 to 31 and Comparative Examples 1 and 2.

The rate of change in weight of live flower is obtained by calculating the following equation:

[the weight of live flower at the time of

measurement/that at the time of starting the test] - 1

and was expressed in percent.

It is apparent from the graphs that with the progress of flowering, the live flower increases its weight and begins to gradually droop after passing the highest peak until it reaches to a zero point below which it withers and dies. The time period suitable for viewing the flower substantially corresponds to the time period between the two zero points on the graph for the rate of change in weight of live flower in each case of the test. The test results show the following: when the cut flower freshness-keeping preservative of the invention is used, the cut flower freshness-keeping term is made longer by a few days to at least one week than when the cut flower freshness-keeping preservative of the invention is not used or when the preservatives of Comparative Examples are used.

INDUSTRIAL APPLICABILITY

According to the present invention, there can be obtained a preservative for keeping cut flower freshness, particularly a preservative which can remarkably keep cut rose freshness.

**Claims**

1. A preservative for keeping cut flower freshness comprising, as effective components, 0.8 to 2 wt.% of at least one saccharide selected from fructose and trehalose, at least one species of potassium salts in a concentration of 100 to 1000 ppm calculated as $K_2O$, and at least one compound selected from aluminum salts or hydrates thereof in a concentration of 1 to 30 ppm calculated as Al.

2. A preservative for keeping cut flower freshness as defined in claim 1 which further comprises an alcohol.

3. A preservative for keeping cut flower freshness as defined in claim 1 wherein the potassium salt is potassium chloride.

4. A preservative for keeping cut flower freshness as defined in any one of claims 1 to 3 wherein the saccharide is fructose.

5. A preparation for keeping cut flower freshness comprising 1.2 to 50 times the specific amounts of effective components of the preservative of any one of claims 1-2.

6. The use of a preservative according to any one of claims 1 to 4 or of a preparation according to claim 5 for keeping freshness of cut roses.

**Patentansprüche**

1. Konservierungsmittel zum Aufrechterhalten der Frische von Schnittblumen, umfassend als wirksame Komponenten 0,8 bis 2 Gew.-% mindestens eines Saccharids ausgewählt aus Fructose und Trehalose, mindestens eine Art von Kaliumsalzen in einer Konzentration von 100 bis 1.000 ppm, berechnet als $K_2O$, und mindestens eine Verbindung ausgewählt aus Aluminiumsalzen oder Hydraten davon in einer Konzentration von 1 bis 30 ppm, berechnet als Al.

2. Konservierungsmittel zum Aufrechterhalten der Frische von Schnittblumen wie in Anspruch 1 definiert, welches ferner einen Alkohol umfasst.

3. Konservierungsmittel zum Aufrechterhalten der Frische von Schnittblumen wie in Anspruch 1 definiert, worin das Kaliumsalz Kaliumchlorid ist.

4. Konservierungsmittel zum Aufrechterhalten der Frische von Schnittblumen wie in irgendeinem der Ansprüche 1 bis 3 definiert, worin das Saccharid Fructose ist.

5. Zubereitung zum Aufrechterhalten der Frische von Schnittblumen umfassend das 1,2- bis 50-fache der spezifischen Mengen der wirksamen Komponenten des Konservierungsmittels nach irgendeinem der Ansprüche 1 bis 2.

6. Verwendung eines Konservierungsmittels nach irgendeinem der Ansprüche 1 bis 4 oder einer Zubereitung nach Anspruch 5 zum Frischhalten von geschnittenen Rosen.

**Revendications**

1. Agent de conservation de fraîcheur pour fleurs coupées comprenant, comme composants efficaces, de 0,8 à 2% en poids d'au moins un saccharide choisi parmi le fructose et le tréhalose, au moins une espèce de sels de potassium en une concentration de 100 à 1000 ppm calculée sous forme de $K_2O$, et au moins un composé choisi parmi les sels d'aluminium ou les hydrates de ceux-ci en une concentration de 1 à 30 ppm calculée sous forme de Al.

2. Agent de conservation de fraîcheur pour fleurs coupées selon la revendication 1, qui comprend en outre un alcool.

3. Agent de conservation de fraîcheur pour fleurs coupées selon la revendication 1, dans lequel le sel de potassium est du chlorure de potassium.

4. Agent de conservation de fraîcheur pour fleurs coupées selon l'une quelconque des revendications 1 à 3, dans lequel le saccharide est du fructose.

5. Préparation de conservation de la fraîcheur des fleurs coupées comprenant de 1,2 à 50 fois les quantités spécifiques des composants actifs de l'agent de conservation selon l'une quelconque des revendications 1 à 2.

6. Utilisation d'un agent de conservation selon l'une quelconque des revendications 1 à 4 d'une préparation selon la revendication 5 pour conserver la fraîcheur de roses coupées.

## Fig. 1

Graph: Rate of change in weight (%) versus (day)

Legend:
- Com.Ex.1
- Com.Ex.3
- Com.Ex.4
- Ex.2
- Ex.3
- Ex.4
- Ex.5
- Ex.6

Fig. 2

Fig. 3

Fig. 4

Fig. 5

Fig. 6

Fig. 7